# EUROPEAN PATENT SPECIFICATION

(11) **EP 3 825 148 B1**
(45) Date of publication and mention of the grant of the patent: **19.04.2023**
(21) Application number: 20208178.2
(22) Date of filing: 17.11.2020
(51) Int. Cl.: B60C 7/14, B29D 30/02, B29C 35/02

(54) **METHOD OF MAKING A NON-PNEUMATIC TIRE AND NON-PNEUMATIC TIRE**
VERFAHREN ZUR HERSTELLUNG EINES NICHT-PNEUMATISCHEN REIFENS UND NICHT-PNEUMATISCHER REIFEN
PROCÉDÉ DE FABRICATION D'UN PNEU NON PNEUMATIQUE ET PNEU NON PNEUMATIQUE

(30) Priority: 21.11.2019 US 201916690619
(43) Date of publication of application: 26.05.2021
(73) Proprietor: The Goodyear Tire & Rubber Company, Akron, OH 44316 (US)
(72) Inventor: SPORTELLI, Francesco, L-3249 Bettembourg (LU); BHUIYAN, Md Atiqur Rahman, Copley, OH 44321 (US); RICHARDS, Jimmy Lee, Rootstown, OH 44272 (US); BOROWCZAK, Marc, Hartville, OH 44632 (US); BOND, Gregory Monroe, Akron, OH 44312 (US)
(74) Representative: Kutsch, Bernd

(56) References cited:
- EP-A1- 3 144 159
- EP-A2- 3 178 665
- WO-A1-2017/116389
- WO-A1-2018/089479
- US-A1- 2015 174 954

## Description

### Field of the invention

The present invention relates generally to vehicle tires and non-pneumatic tires, and more particularly, to a method of making a non-pneumatic tire.

### Background of the invention

The pneumatic tire has been the solution of choice for vehicular mobility for over a century. The pneumatic tire is a tensile structure. The pneumatic tire has at least four characteristics that make the pneumatic tire so dominate today. Pneumatic tires are efficient at carrying loads, because all of the tire structure is involved in carrying the load. Pneumatic tires are also desirable because they have low contact pressure, resulting in lower wear on roads due to the distribution of the load of the vehicle. Pneumatic tires also have low stiffness, which ensures a comfortable ride in a vehicle. The primary drawback to a pneumatic tire is that it requires compressed fluid. A conventional pneumatic tire is rendered useless after a complete loss of inflation pressure.

A tire designed to operate without inflation pressure may eliminate many of the problems and compromises associated with a pneumatic tire. Neither pressure maintenance nor pressure monitoring is required. Structurally supported tires such as solid tires or other elastomeric structures to date have not provided the levels of performance required from a conventional pneumatic tire. A structurally supported tire solution that delivers pneumatic tire-like performance would be a desirous improvement.

Non-pneumatic tires are typically defined by their load carrying efficiency. "Bottom loaders" are essentially rigid structures that carry a majority of the load in the portion of the structure below the hub. "Top loaders" are designed so that all of the structure is involved in carrying the load. Top loaders thus have a higher load carrying efficiency than bottom loaders, allowing a design that has less mass.

Thus, an improved non-pneumatic tire is desired that has all the features of the pneumatic tires without the drawback of the need for air inflation is desired.

WO 2018/089479 A1 describes a method of making a non-pneumatic tire in accordance with the preamble of claim 1.

### Summary of the Invention

The invention relates to a method in accordance with claim 1.

Dependent claims refer to preferred embodiments of the invention.

In a preferred embodiment of the invention, a method of making a non-pneumatic tire is disclosed, the non-pneumatic tire comprising a ground contacting annular tread portion comprising a tread rubber composition, a shear band comprising a cord reinforced rubber composition and disposed radially inward of the tread portion, and at least one spoke disk disposed radially inward of the shear band; wherein the spoke disk has an outer ring, and an inner ring, and a first and second spoke extending radially between the outer ring and the inner ring, wherein the first and second spokes are connected at a joint, the method comprising the steps of: applying a curable adhesive as an interface between a radially outermost surface of the spoke disk and a radially innermost surface of the shear band in its uncured state; assembling the tread portion in an uncured state, the shear band in an uncured state, and the at least one spoke disk to form a pre-assembly; and curing the pre-assembly.

### Brief Description of the Drawings

The present invention will be better understood through reference to the following description and the appended drawings, in which:
FIG. 1 is a perspective view of a first embodiment of a non-pneumatic tire of the present invention;
FIG. 2 is a perspective cross-sectional view of the of the non-pneumatic tire of FIG. 1;
FIG. 3 is a partial cross-sectional view of the non-pneumatic tire of FIG. 1 illustrating the tread and shear band; and
FIG. 4 is an exploded view of a tire of the present invention.

### Detailed Description of Example Embodiments of the Invention

The present invention is directed to a method of making a non-pneumatic tire, the non-pneumatic tire comprising a ground contacting annular tread portion comprising a tread rubber composition, a shear band comprising a cord reinforced rubber composition and disposed radially inward of the tread portion, and at least one spoke disk disposed radially inward of the shear band; wherein the spoke disk has an outer ring, and an inner ring, and a first and second spoke extending radially between the outer ring and the inner ring, wherein the first and second spokes are connected at a joint; the method comprising the steps of: applying a curable adhesive as an interface between a radially outermost surface of the spoke disk and a radially innermost surface of the shear band in its uncured state, assembling the tread portion in an uncured state, the shear band in an uncured state, and the at least one spoke disk to form a pre-assembly, and curing the pre-assembly.

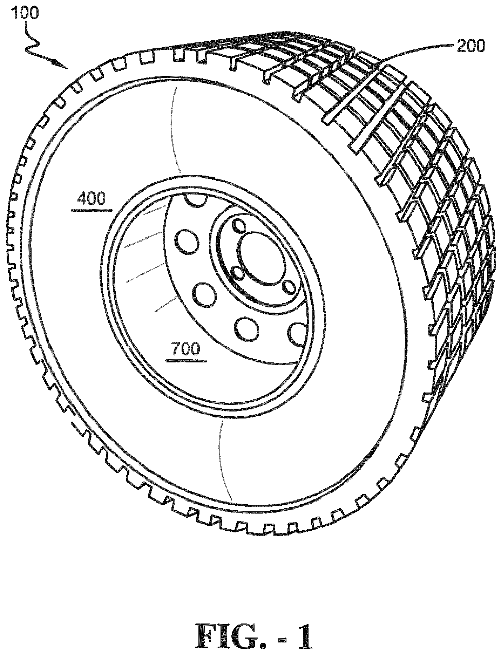

A first embodiment of a non-pneumatic tire 100 of the present invention is shown in FIGS. 1-4. The non-pneumatic tire of the present invention includes a radially outer ground engaging tread 200, a shear band 300, one or more spoke disks 400, 500, and a rim 700. The spoke disks 400, 500 may have different designs, as described in more detail, below. The non-pneumatic tire of the present invention is designed to be a top loading structure, so that the shear band 300 and the one or more spoke disks 400, 500 efficiently carry the load. The shear band 300 and the spoke disks are designed so that the stiffness of the shear band is directly related to the spring rate of the tire. The spokes of each disk are designed to be stiff structures that deform in the tire footprint. This allows the rest of the spokes not in the footprint area the ability to carry the load. Since there are more spokes outside of the footprint than in, the load per spoke would be small enabling smaller spokes to carry the tire load which gives a very load efficient structure. Not all spokes will be able to elastically deform and will retain some portion of the load in compression in the footprint. It is desired to minimize this load for the reason above and to allow the shearband to bend to overcome road obstacles. The approximate load distribution is such that approximately 90-100% of the load is carried by the shear band and the upper spokes, so that the lower spokes carry virtually zero of the load, and preferably less than 10%.

The non-pneumatic tire may have different combination of spoke disks in order to tune the non-pneumatic tire with desired characteristics. For example, a first spoke disk 500 may be selected that carries both shear load and tensile load. A second spoke disk may be selected that carries a pure tensile load.

The tread portion 200 may have no grooves or may have a plurality of longitudinally oriented tread grooves forming essentially longitudinal tread ribs there between. Ribs may be further divided transversely or longitudinally to form a tread pattern adapted to the usage requirements of the particular vehicle application. Tread grooves may have any depth consistent with the intended use of the tire. The tire tread 200 may include elements such as ribs, blocks, lugs, grooves, and sipes as desired to improve the performance of the tire in various conditions.

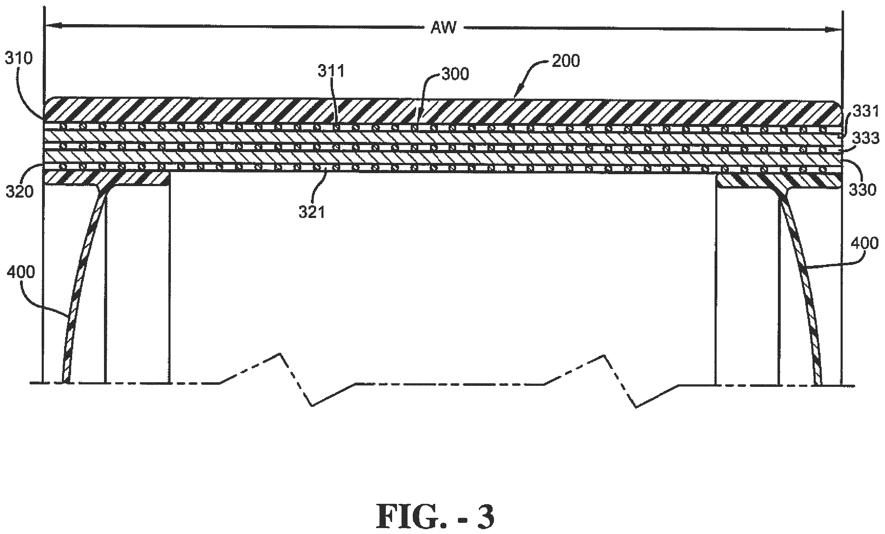

The shear band 300 is preferably annular and is shown in FIG. 3. The shear band 300 is located radially inward of the tire tread 200 and extends across the axial thickness AW of the non-pneumatic tire. The shear band 300 includes a first and second reinforced elastomer layer 310, 320. The shear band 300 may be formed of two inextensible layers 310, 320 arranged in parallel, and separated by a shear matrix 330 of elastomer. Each inextensible layer 310, 320 may be formed of parallel inextensible reinforcement cords 311, 321 embedded in an elastomeric coating. The reinforcement cords 311,321 may be steel, aramid, or other inextensible structure. The shear band 300 may optionally include a third reinforced elastomer layer 333 located between the first and second reinforced elastomer layers 310, 320 and between shear matrix layers 330, 331.

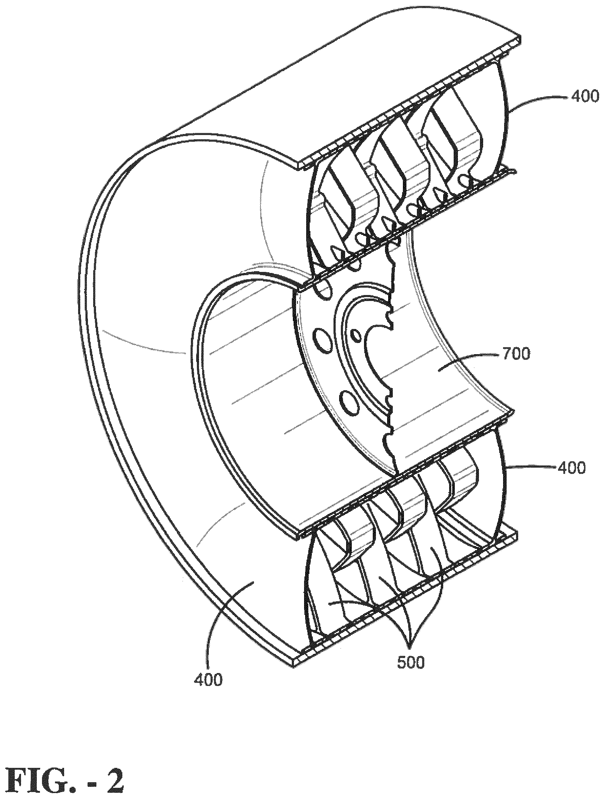

One embodiment of a non-pneumatic tire is shown in FIG. 2. The spoke disks on the outer axial ends of the tire are the solid disks 400, and are oriented so that they deform axially outward, as shown in FIG. 3. Although not shown, there may be two solid spoke disks on each end of the tire. The solid disks 400 may also be located at any desired axial location. The first embodiment may optionally include one or more spoke disks 500 located between the solid spoke disks 400. The solid disks 400 are designed to carry both shear and tension loads, while the spoke disks 500 are designed to carry loads in tension only. The number of spoke disks 500 may be selected as needed. The orientation of the spoke disks 500 may be such that the spokes are axially and radially aligned. Preferably the spoke disks 500 may be rotationally staggered at angular intervals in the range of 5-60 degrees, more preferably 10-30 degrees. Optionally, the spoke disks 500 may be rotated 180 degrees about a central axis so that the disks bend in an opposite angular direction. The solid disks 400 bend or deform axially outward, while the spoke disks bend in an angular plane theta. The disks 400,500 are designed to be laterally stiff, so that they can be combined to tune the tire lateral stiffness.

The spoke disks are preferably formed of an elastic material, more preferably, a thermoplastic elastomer. The material of the spoke disks is selected based upon one or more of the following material properties. The tensile (Young's) modulus of the disk material is preferably in the range of 45 MPa to 650 MPa, and more preferably in the range of 85 MPa to 300 MPa, using the ISO 527-1/-2 standard test method. The glass transition temperature is less than -25 degree Celsius, and more preferably less than -35 degree Celsius. The yield strain at break is more than 30%, and more preferably more than 40%. The elongation at break is more than or equal to the yield strain, and more preferably, more than 200%. The heat deflection temperature is more than 40 degree C under 0.45 MPa, and more preferably more than 50 degree C under 0.45 MPa. No break result for the Izod and Charpy notched test at 23 degree C using the ISO 179/ISO180 test method. Two suitable materials for the disk is commercially available by DSM Products and sold under the trade name ARNITEL PL 420H, PL461, PM 581, EM 630, and ID2060 HT.

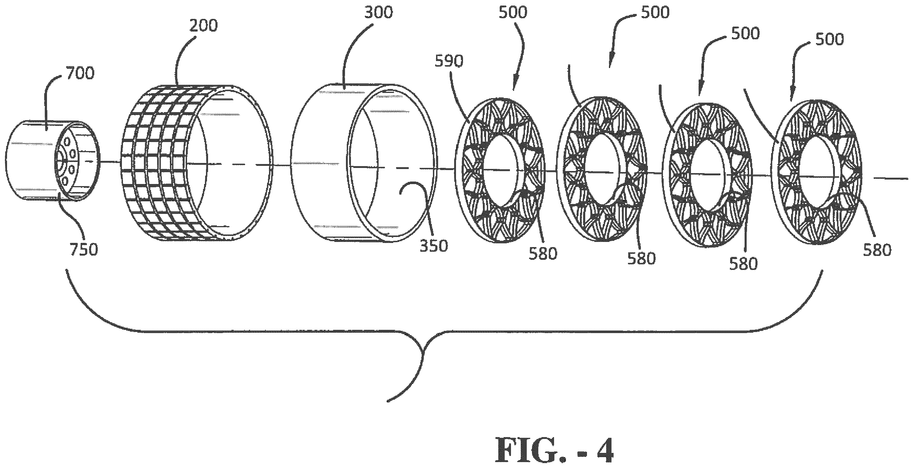

Fig. 4 shows schematic illustrations of the assembly of the non-pneumatic tire 100. With reference to Fig. 4, non-pneumatic tire 100 is shown in expanded view indicating the orientation of the various assembled components. In the illustrated embodiment, the tire 100 includes rim 700 with spoke disks 500 disposed concentrically and axially along the outer surface 750 of rim 700. Spoke disks 500 engage rim 700 via an adhesive bond between radially innermost surface 580 of the spoke disk 500 and radially outermost surface 750 of the rim 700. Shear band 300 is disposed concentrically over the axially disposed spoke disks 500. Shear band 300 engages spoke disks 500 via an adhesive bond between radially innermost surface 350 of shear band 300 and radially outermost surfaces 590 of spoke disks 500. Tread 200 radially overlays shear band 300 and is bonded to shear band 300 via co-curing of the elastomer compositions.

The adhesive bond between the spoke disks 500 and the shear band 300, is accomplished using an appropriate adhesive as an interface between the outermost surface of the spoke disk 590 and the innermost surface of 350 of shear band 300 that bonds effectively between thermoplastic and elastomer. In one embodiment, the adhesive bond between the spoke disks 500 and the shear band 300 is formed by application of a two-part adhesive followed by co-curing of the adhesive with the shear band after assembly of the parts shown in Fig. 4. Suitable two-part adhesives include Chemosil 211 as a primer and Chemosil 225 as the elastomer bonding agent, or Chemlok 205 as primer and Chemlok 6250 as the elastomer bonding agent, all available commercially from Lord Corporation. In one embodiment, the primer is applied to the spoke disk outermost surface 590 and allowed to dry, followed by application of the elastomer bonding agent over the previously applied and dried primer. After assembly of all parts as shown in FIG. 4 the pre-assembly 800 (assembly prior to cure) is cured at suitable temperature and pressure for a predetermined time to cure the adhesive between the spoke disks and shear band, and to cure the shear band and annular tread. In one embodiment, the pre-assembly includes the attached rim 700. In one embodiment (not shown), the pre-assembly excludes the rim, and the rim may be attached to the pre-assembly after cure of the pre-assembly.

The adhesive may be applied in thin layers to radially innermost surface 350 of shear band 300, followed by assembly of the various components. The adhesive may be applied for example manually using a brush, sponge, trowel, spatula or the like.

## Claims

1. A method of making a non-pneumatic tire, the non-pneumatic tire (100) comprising an annular tread portion (200) comprising a tread rubber composition, a shear band (300) comprising a preferably cord reinforced rubber composition and disposed radially inward of the tread portion (200), and at least one spoke disk (500) disposed radially inward of the shear band (300);
**characterized in that** the method comprising the steps of:
applying a curable adhesive as an interface between a radially outermost surface (590) of the spoke disk (500) and a radially innermost surface (350) of the shear band (300) in an uncured state of the shear band (300);
assembling the tread portion (200) in an uncured state of the tread portion (200), the shear band (300) in an uncured state of the shear band (300), and the at least one spoke disk (500) to form a pre-assembly; and
curing the pre-assembly.

2. The method of claim 1 wherein the spoke disk (500) has an outer ring and an inner ring and a first and second spoke extending radially between the outer ring and the inner ring, and wherein the first and second spokes are connected at a joint.

3. The method of claim 1 or 2, wherein the pre-assembly further comprises a rim (700), wherein the at least one spoke disk (500) is connected to the rim (700) between a radially outermost surface of the rim (750) and a radially innermost surface of the spoke disk (580).

4. The method of at least one of the previous claims, wherein the curable adhesive comprises a primer and an elastomer bonding agent, and wherein the step of applying the curable adhesive comprises applying the primer to the radially outermost surface (590) of the spoke disk (500).

5. The method of claim 4 further comprising subsequently applying the elastomer bonding agent over the primer.

6. The method of claim 3, wherein the at least one spoke disk (500) is connected to the rim (700) via a second adhesive bond between a radially outermost surface of the rim (750) and a radially innermost surface (580) of the spoke disk (500).

## Patentansprüche

1. Verfahren zur Herstellung eines luftlosen Reifens, wobei der luftlose Reifen (100) einen ringförmigen Laufflächenabschnitt (200) umfasst, der eine Laufflächengummizusammensetzung umfasst, ein Scherband (300), das eine vorzugsweise kordverstärkte Gummizusammensetzung umfasst und das radial nach innen des Laufflächenabschnitts (200) angeordnet ist, und mindestens eine radial nach innen in Bezug auf das Scherband (300) angeordnete Speichenscheibe (500);
**dadurch gekennzeichnet, dass** das Verfahren die Schritte umfasst von
Auftragen eines härtbaren Klebstoffs als Grenzfläche zwischen einer radial äußersten Oberfläche (590) der Speichenscheibe (500) und einer radial innersten Oberfläche (350) des Scherbandes (300) in einem unvulkanisierten Zustand des Scherbandes (300);
Zusammenbau des Laufflächenabschnitts (200) in einem unvulkanisierten Zustand des Laufflächenabschnitts (200), des Scherbandes (300) in einem unvulkanisierten Zustand des Scherbandes (300) und der mindestens einen Speichenscheibe (500) zu einer Vormontage ; und
Vulkanisierung der Vormontage.

2. Verfahren nach Anspruch 1, wobei die Speichenscheibe (500) einen Außenring und einen Innenring und eine sich radial zwischen dem Außenring und dem Innenring erstreckende erste und zweite Speiche aufweist und wobei die erste und zweite Speiche an einem Gelenk verbunden sind.

3. Verfahren nach Anspruch 1 oder 2, wobei die Vormontage ferner eine Felge (700) umfasst, wobei die mindestens eine Speichenscheibe (500) mit der Felge (700) zwischen einer radial äußersten Fläche der Felge (750) und einer radial innersten Fläche der Speichenscheibe (580) verbunden ist.

4. Verfahren nach mindestens einem der vorhergehenden Ansprüche, wobei der härtbare Klebstoff einen Primer und ein elastomeres Bindemittel umfasst und wobei der Schritt des Auftragens des härtbaren Klebstoffs das Auftragen des Primers auf die radial äußerste Oberfläche (590) der Speichenscheibe (500) umfasst.

5. Verfahren nach Anspruch 4, wobei das elastomere Bindemittel anschließend über den Primer aufgetragen wird.

6. Verfahren nach Anspruch 3, wobei die mindestens eine Speichenscheibe (500) mit der Felge (700) über eine zweite Klebeverbindung zwischen einer radial äußersten Fläche der Felge (750) und einer radial innersten Fläche (580) der Speichenscheibe (500) verbunden ist.

## Revendications

1. Procédé de confection d'un bandage non pneumatique, le bandage non pneumatique (100) comprenant une portion annulaire (200) faisant office de bande de roulement qui comprend une composition de caoutchouc pour bande de roulement, une bande de cisaillement (300) qui comprend une composition de caoutchouc de préférence renforcé avec des câblés et qui est disposée, dans la direction radiale, à l'intérieur de la portion (200) faisant office de bande de roulement, et au moins un disque à rayons (500) qui est disposé, dans la direction radiale, à l'intérieur de la bande de cisaillement (300) ;
**caractérisé en ce que** le procédé comprend les étapes dans lesquelles :
on applique un adhésif durcissable sous la forme d'une interface entre une surface (590) la plus externe dans la direction radiale du disque à rayons (500) et une surface la plus interne dans la direction radiale (350) de la bande de cisaillement (300) à l'état non vulcanisé de la bande de cisaillement (300) ;
on assemble la portion (200) faisant office de bande de roulement dans un état non vulcanisé de la portion (200) faisant office de bande de roulement, la bande de cisaillement (300) dans un état non vulcanisé de la bande de cisaillement (300), et ledit au moins disque à rayons (500) afin de former un assemblage préalable ; et
on vulcanise l'assemblage préalable.

2. Procédé selon la revendication 1, dans lequel le disque à rayons (500) possède un anneau externe et un anneau interne ainsi qu'un premier et un deuxième rayon qui s'étendent dans la direction radiale entre l'anneau externe et l'anneau interne ; et dans lequel le premier et le deuxième rayon sont reliés à un raccord.

3. Procédé selon la revendication 1 ou 2, dans lequel l'assemblage préalable comprend en outre une jante (700) ; dans lequel ledit au moins un disque à rayons (500) est relié à la jante (700) entre une surface de la jante (750) la plus externe dans la direction radiale et une surface du disque à rayons (580) la plus interne dans la direction radiale.

4. Procédé selon au moins une des revendications précédentes, dans lequel l'adhésif durcissable comprend un apprêt et un agent de liaison élastomère ; et dans lequel l'étape au cours de laquelle on applique l'adhésif durcissable comprend le fait d'appliquer l'apprêt sur la surface (590) du disque à rayons (500) la plus externe dans la direction radiale.

5. Procédé selon la revendication 4, qui comprend en outre le fait d'appliquer par la suite l'agent de liaison élastomère par-dessus l'apprêt.

6. Procédé selon la revendication 3, dans lequel ledit au moins un disque à rayons (500) est reliée à la jante (700) par l'intermédiaire d'une deuxième liaison adhésive entre une surface de la jante (750) la plus externe dans la direction radiale et une surface (580) du disque à rayons (500) la plus interne dans la direction radiale.
